# EUROPEAN PATENT SPECIFICATION

(11) **EP 2 243 648 B1**
(45) Date of publication and mention of the grant of the patent: **31.08.2011**
(21) Application number: 09382052.0
(22) Date of filing: 22.04.2009
(51) Int. Cl.: B60J 5/04

(54) **Reinforcement for vehicle doors and process for the manufacture thereof**
Verstärkung für Fahrzeugtüren und Herstellungsverfahren dafür
Renforcement de portes de véhicule et son procédé de fabrication

(43) Date of publication of application: 27.10.2010
(73) Proprietor: Autotech Engineering, A.I.E., 48220 Abadiño (Vizcaya) (ES); Estampaciones Metalicas Vizcaya, S.A., 48220 Abadiño (Vizcaya) (ES); Gestamp Aveiro - Industria e Acessorios de Automoveis, S.A., 3700 Nogueira de Cravo, Oliveira de Azemeis (PT); Gestamp Portugal, Lda., 4920-247 Freguesia de Campos (PT); Gestamp Toledo, S.L., 45224 Seseña La Nueva (Toledo) (ES); Gestamp Linares, S.A., 23700 Linares (Jaén) (ES)
(72) Inventor: Alapont Etxaniz, Iñaki, 48991 Algorta (Bizkaia) (ES); Bilbao Garcia, Jon, 48215 Iurreta (Bizkaia) (ES)
(74) Representative: Carpintero Lopez, Francisco

(56) References cited:
- WO-A-95/16084
- WO-A-2006/041497
- US-A- 2 508 032
- US-A- 3 332 197
- US-A- 6 109 329
- US-B1- 6 296 287

## Description

### Object of the Invention

The present invention relates to a reinforcement for vehicle doors, of the type of those configured by a metal profile with a high elastic limit, and to the process for the manufacture thereof, such a reinforcement is known from e.g. WO 2006/041497.

### Background of the Invention

In the automotive sector, the reinforcements arranged in vehicle doors at an intermediate height corresponding with the waist are widely used. For example, the reinforcement described in European patent EP1604851, of the same applicant, describes a reinforcement intended to be placed in the inner part of the door of an automobile, this reinforcement having a wavy section and said profile being welded at its ends to the inner side of the door.

These reinforcements can be formed by an open geometry, such as the one mentioned above, but it has been verified that when these reinforcements have a closed, for example tubular, section they are more resistant and considerably increase the safety of the vehicle occupants in the event of a head-on impact.

A feature of these reinforcements is that they require an overlap for their subsequent assembly to the door. The absence of this overlap only makes it possible for them to be secured at the ends, reducing their efficiency in head-on impacts. This limits the use of conventional tube type closed sections and forces using more complex solutions.

Until a few years ago, the reinforcements were exclusively manufactured by means of two die-pressed parts (half-shells) which were connected by means of a welding system such that a closed section was obtained. More modern versions are manufactured in extruded aluminium or hollow profiles in steel with overlap. The most usual process for manufacturing hollow profiles in steel is profiling.

The reinforcements configured from a profile are connected by various types of welding, such as laser welding, seam welding, bead welding or spot welding, among others. This welding is continuous or discontinuous and is carried out by means of the parallel or perpendicular longitudinal overlap of the edges of the profile of the reinforcement.

This represents several problems, consisting of the complexity of the process and the possible existence of defects affecting the quality of the reinforcement.

Firstly, welding processes are generally slower than the profiling process, involving a reduction in the production line output and increasing the reinforcement cost.

Secondly, in continuous welding processes, the actual welding is very sensitive to not being continuous, but it can have interruptions and require prior operations of scraping and treating the metal sheet so that said welding is as optimal as possible. This involves rather considerable potential quality problems and costs.

Finally, non-continuous spot welding processes have the drawback of needing a double overlap for the application of the spot, with the drawbacks of weight and cost increase that this involves.

### Description of the Invention

The reinforcement for vehicle doors and process for the manufacture thereof, object of this invention, has technical particularities intended to allow a manufacture that is quicker and has lower costs than conventional welded reinforcements, maintaining their mechanical properties.

This lateral reinforcement comprises a profile with a closed section intended to be fixed in the inner part of the door of a vehicle, the mentioned profile being formed from a metal sheet having at least one window in an area close to one of its edges and at least one flange in an edge opposite of the mentioned metal sheet. This flange is housed in the window such that an end projects with respect to the window and is deformed to allow the retention of said flange with respect to the window.

This mechanical connection provides an effectiveness comparable to welding. Furthermore, the mentioned connection, due to the deformation of the ends of the flange, does not have the problem of possible defects in the profiles manufactured with welding, as occurs in a conventional reinforcement, in which the welding can have unwanted discontinuities or be defective.

The window for housing the flange has a rectangular configuration, with a length substantially equal to the width of the flange and a width substantially equal to the thickness of the flange.

The mechanical deformation of the flange introduced through the window prevents its release and reaffirms the configuration of the closed profile, being able to be manufactured in different ways. Thus, the flange can be bent toward a side of the window. In another embodiment, flange has a cut according to a plane parallel to the surface of the flange, two tabs thus being defined which can be bent towards two opposite sides of the window. In another embodiment, the end of the flange is riveted, extending at least towards one of the sides of the window.

With this mechanical connection, the profile manufacturing process is considerably simplified, substituting the welding and welding preparation processes, which require very precise parameters, with other simpler mechanical processes with higher tolerance.

The reinforcement for vehicle doors object of the invention can use a metal sheet with a high elastic limit.

The process for manufacturing a reinforcement for vehicle doors starts from a metal sheet which can have a high elastic limit. This process comprises the phases of:
- forming at least one window in an area close to one of the edges of the sheet and at least one flange in correspondence with an opposite edge of the sheet
- forming the metal sheet to obtain a profile with a closed section
- introducing the flanges through the window such that an end of the mentioned flange projects with respect to the window,
- deforming the end of the flange projecting through the window, such that it is placed against the outer surface of the metal sheet.

The window and the flange are preferably formed by punching, in which dies or punches make a plurality of windows in an area closed to a longitudinal edge of the metal sheet and another set of conjugated dies or punches directly cut the opposite edge of the mentioned sheet, whereby a plurality of flanges intended to be introduced in the windows is obtained.

The ends of the flanges projecting through the windows can be deformed in many ways and preferably by means of lateral bending or by means of riveting. This operation is carried out by means of a forming post at the outlet of the profiling stations or by means of rollers inside the actual profiling line after the last section profiling station.

In an additional phase the profile is transversely cut to a suitable length of the reinforcement portions.

### Description of the Drawings

To complement the description which is being made and with the aim of aiding to better understand the features of the invention, a set of drawings is attached to this specification in which the following has been depicted with an illustrative and non-limiting character:
- Figure 1 shows a perspective view of a reinforcement portion.
- Figure 2 shows a perspective view of the profile of the reinforcement before it is closed and the flanges are fixed.
- Figure 3 shows a perspective view of an embodiment of the profile with the flanges bent towards both sides in an alternating manner.
- Figure 4 shows a perspective view of an embodiment of the profile in which the flanges have a cut parallel to the surface of the flange and a tab bent towards each side.
- Figure 5 shows a perspective view of an embodiment of the profile in which the ends of the flanges are riveted on the windows.

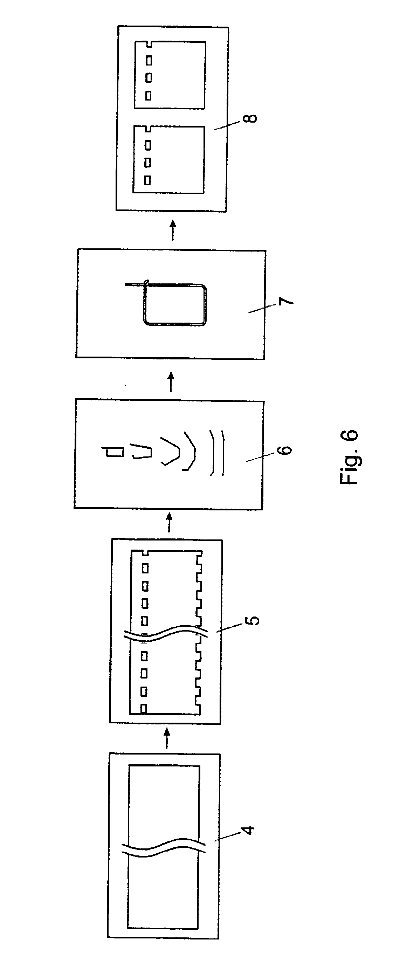

- Figure 6 shows a diagram of the manufacturing process production line.

### Preferred Embodiment of the Invention

As can be observed in the referenced figures, the reinforcement of the present invention is formed by a closed profile (1), formed from a metal sheet or plate of steel with a high elastic limit, said profile (1) having next to a longitudinal edge a plurality of rectangular windows (2), while on the other longitudinal edge it has a plurality of flanges (3) corresponding with the windows (2) to couple them and lock them together by means of the deformation of the ends of said flanges (3) towards either side of the corresponding window (2).

These windows (2) have a length corresponding to the width of the flanges (3) and a width corresponding to the thickness of said flanges (3) plus a small clearance.

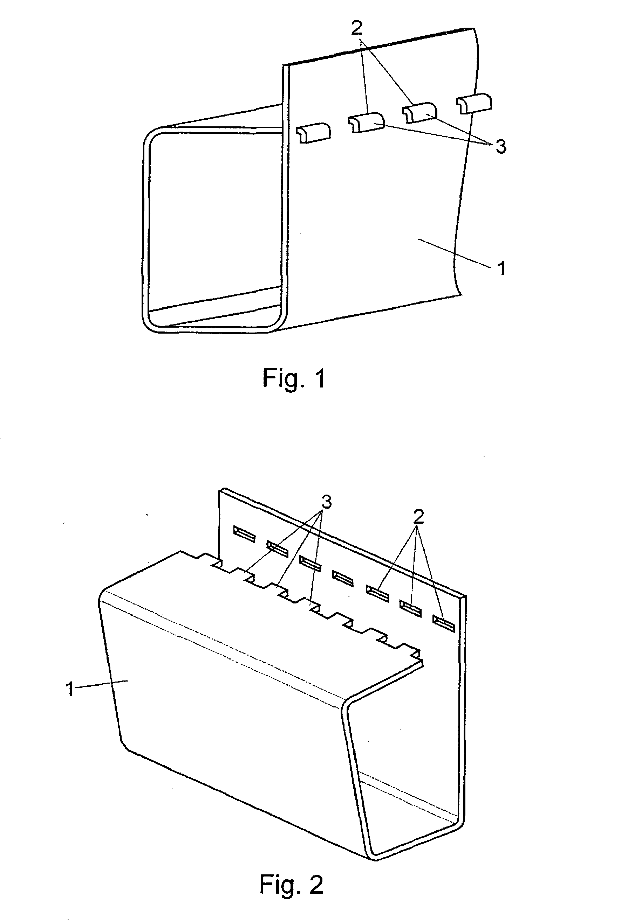

In the example shown in Figure 1 the ends of the flanges (3) introduced in the windows (2) are bent towards one and the same side of the windows.

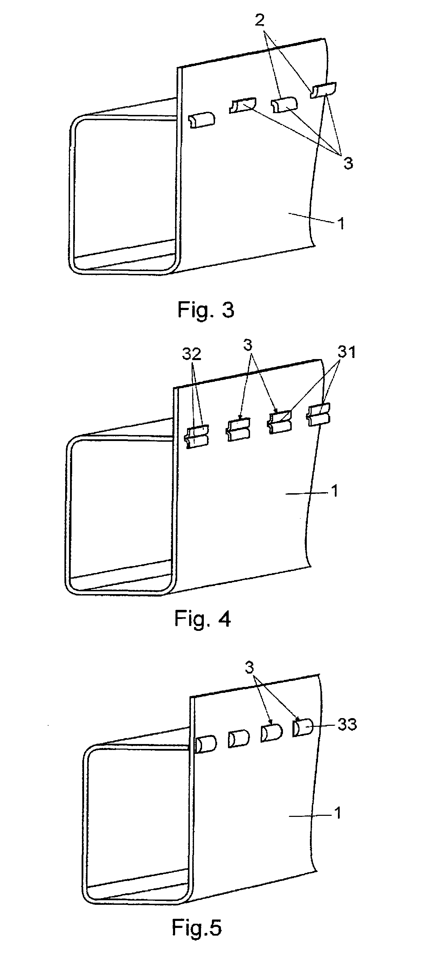

In Figure 3, alternate flanges (3) are bent towards opposite sides of the windows (2).

In another embodiment, depicted in Figure 4, the flanges (3) have a cut (31), according to a plane parallel to the surface of the flange (3), two tabs (32) being defined which can be bent towards two opposite sides of the window (2).

In a final embodiment, depicted in Figure 5, the ends of the flanges (3) are riveted on the windows (2), said ends forming lateral extensions (33) fixing the profile (1) of the reinforcement in its configuration with a closed section.

The reinforcement is formed in a profiling line in which the manufacturing process takes place, starting from an unwinding machine for the plate or sheet and a straightening station (4), it then comprises a punching machine (5) in which the windows (2) and the flanges (3) are formed. Then there is a profiling assembly (6) forming the section of the profile (1) from the plate, introducing the flanges (3) in the window (2). At the outlet of this profiling assembly (6) there is a forming post (7) in which the ends of the flanges (3) are bent. In a last step there is a cutting machine (8) for cutting the profile (1) into the reinforcements with a suitable length.

Having sufficiently described the nature of the invention as well as a preferred embodiment, it is stated for all relevant purposes that the materials, shape, size and arrangement of the described elements may be modified, provided that this does not involve an alteration of the essential features of the invention which are claimed below.

## Claims

1. Reinforcement for vehicle doors, comprising a profile (1) with a closed section intended to be fixed in the inner part of the door of a vehicle, **characterized in that** the profile (1) is formed from a metal sheet having at least one window (2) in an area close to one of its edges and at least one flange (3), housed in the window (2), in an opposite edge of the mentioned metal sheet, such that an end of the mentioned flange (3) projects with respect to the window (2) and is deformed for the retention of the mentioned flange (3) with respect to the window (2).

2. Reinforcement according to claim 1, **characterized in that** the window (2) has a rectangular configuration, with a length substantially equal to the width of the flange (3) and with a width substantially equal to the thickness of the flange (3).

3. Reinforcement according to claim 1, **characterized in that** the mentioned flange (3) is bent towards a side of the window (2) to be placed against the outer surface of the metal sheet.

4. Reinforcement according to claim 1, **characterized in that** the flange (3) has a cut (31), according to a plane parallel to the surface of the flange (3) to define two tabs which can be bent towards two opposite sides of the window (2).

5. Reinforcement according to claim 1, **characterized in that** the end of the projection (3) is riveted, extending at least towards one of the sides of the corresponding window (2).

6. Reinforcement according to claim 1, **characterized in that** the metal sheet is of steel with a high elastic limit.

7. Process for manufacturing a lateral reinforcement for vehicle doors from a metal sheet, **characterized in that** it comprises the phases of:
- forming at least one window (2) in an area close to one of the edges of the sheet and at least one flange (3) in correspondence with an opposite edge of the sheet,
- forming the metal sheet to obtain a profile (1) with a closed section
- introducing the flange (3) through the window (2) such that an end of said flange (3) projects with respect to the mentioned window (2)
- deforming the end of the flange (3) projecting through the window (2), such that it is placed against the outer surface of the metal sheet.

8. Process according to claim 7, **characterized in that** the window (2) and the flange (3) are formed by punching.

9. Process according to claim 7, **characterized in that** it comprises an additional phase of cutting (8) the formed profile (1).

10. Process according to claims 7-9, **characterized in that** the metal sheet used is of steel with a high elastic limit.

## Patentansprüche

1. Verstärkung für Fahrzeugtüren, mit einem einen geschlossenen Querschnitt aufweisenden Profil (1), zur Anbringung im Innenteil der Tür eines Fahrzeugs, **dadurch gekennzeichnet, dass** das Profil (1) aus einem Metallblech gebildet ist, welches mindestens eine Öffnung (2) in einem Bereich nahe einem seiner Ränder und mindestens einen an einem entgegengesetzten Rand des genannten Metallblechs ausgebildeten Flansch (3) aufweist, der in der Öffnung (2) derart aufgenommen ist, dass ein Ende des genannten Flanschs (3) in Bezug auf die Öffnung (2) vorsteht und zum Halten des genannten Flanschs (3) in Bezug auf die Öffnung (2) verformt ist.

2. Verstärkung nach Anspruch 1, **dadurch gekennzeichnet, dass** die Öffnung (2) rechteckig ausgebildet ist, wobei die Länge im Wesentlichen gleich der Breite des Flanschs (3) und die Breite im Wesentlichen gleich der Dicke des Flanschs (3) ist.

3. Verstärkung nach Anspruch 1, **dadurch gekennzeichnet, dass** der genannte Flansch (3) in Richtung einer Seite der Öffnung (2) gebogen ist, um in Anlage an der Außenfläche des Metallblechs angeordnet zu werden.

4. Verstärkung nach Anspruch 1, **dadurch gekennzeichnet, dass** der Flansch (3) einen Schnitt (31) entsprechend einer parallel zur Fläche des Flanschs (3) verlaufenden Ebene aufweist, um zwei Laschen zu bilden, die in Richtung zweier entgegengesetzter Seiten der Öffnung (2) biegbar sind.

5. Verstärkung nach Anspruch 1, **dadurch gekennzeichnet, dass** das Ende des **Vorsprungs** (3) genietet ist, wobei es sich zumindest in Richtung einer der Seiten der entsprechenden Öffnung (2) erstreckt.

6. Verstärkung nach Anspruch 1, **dadurch gekennzeichnet, dass** das Metallblech aus Stahl mit einem hohen Elastizitätsgrenze besteht.

7. Verfahren zur Herstellung einer Seitenverstärkung für Fahrzeugtüren aus einem Metallblech, **dadurch gekennzeichnet, dass** es die folgenden Schritte aufweist:
- Bilden mindestens einer Öffnung (2) in einem Bereich nahe eines der Ränder des Blechs und mindestens eines entsprechenden Flanschs (3) an einem gegenüberliegenden Rand des Blechs,
- Formen des Metallblechs zu einem Profil (1) mit geschlossenem Querschnitt,
- Führen des Flanschs (3) durch die Öffnung (2) derart, dass ein Ende des Flanschs (3) in Bezug auf die genannte Öffnung (2) vorsteht,
- Verformen des durch die Öffnung (2) ragenden Endes des Flanschs (3), derart dass es in Anlage an der Außenfläche des Metallblechs angeordnet wird.

8. Verfahren nach Anspruch 7, **dadurch gekennzeichnet, dass** die Öffnung (2) und der Flansch (3) durch Stanzen gebildet werden.

9. Verfahren nach Anspruch 7, **dadurch gekennzeichnet, dass** er den zusätzlichen Schritt des Schneidens (8) des geformten Profils (1) aufweist.

10. Verfahren nach den Ansprüchen 7-9, **dadurch gekennzeichnet, dass** das verwendete Metallblech aus Stahl mit einer hohen Elastizitätsgrenze besteht.

## Revendications

1. Renforcement pour des portes de véhicule, comprenant un profilé (1) avec une section fermée destiné à être fixé dans la partie intérieure de la porte d'un véhicule, **caractérisé en ce que** le profilé (1) est réalisé en une tôle ayant au moins une fenêtre (2) dans une zone proche d'un de ses bords et au moins une bride (3), logée dans la fenêtre (2), dans un bord opposé de la tôle mentionnée de sorte qu'une extrémité de la bride mentionnée (3) fait saillie par rapport à la fenêtre (2) et est déformée pour la retenue de la bride mentionnée (3) par rapport à la fenêtre (2).

2. Renforcement selon la revendication 1, **caractérisé en ce que** la fenêtre (2) a une configuration rectangulaire, avec une longueur sensiblement égale à la largeur de la bride (3), et avec une largeur sensiblement égale à l'épaisseur de la bride (3).

3. Renforcement selon la revendication 1, **caractérisé en ce que** la bride mentionnée (3) est courbée vers un côté de la fenêtre (2) à placer contre la surface extérieure de la tôle.

4. Renforcement selon la revendication 1, **caractérisé en ce que** la bride (3) possède une découpure (31), en accord avec un plan parallèle à la surface de la bride (3) pour définir deux pattes qui peuvent être courbées vers deux côtés opposés de la fenêtre (2).

5. Renforcement selon la revendication 1, **caractérisé en ce que** l'extrémité de la saillie (3) est rivetée, s'étendant au moins vers un des côtés de la fenêtre correspondante (2).

6. Renforcement selon la revendication 1, **caractérisé en ce que** la tôle est en acier avec une limite élastique élevée.

7. Procédé de fabrication d'un renforcement latéral pour des portes de véhicule à partir d'une tôle, **caractérisé en ce qu'**il comprend les phases de:
- former au moins une fenêtre (2) dans une zone proche d'un des bords de la tôle et au moins une bride (3) en correspondance avec un bord opposé de la tôle,
- former la feuille métallique pour obtenir un profilé (1) avec une section fermée
- introduire la bride (3) à travers la fenêtre (2) de sorte qu'une extrémité de ladite bride (3) fait saillie par rapport à la fenêtre mentionnée (2)
- déformer l'extrémité de la bride (3) faisant saillie à travers la fenêtre (2) de sorte qu'elle est placée contre la surface extérieure de la tôle.

8. Procédé selon la revendication 7, **caractérisé en ce que** la fenêtre (2) et la bride (3) sont formées par poinçonnage.

9. Procédé selon la revendication 7, **caractérisé en ce qu'**il comprend une phase additionnelle consistant à couper (8) le profilé formé (1).

10. Procédé selon les revendications 7 à 9, **caractérisé en ce que** la tôle utilisée est en acier avec une limite élastique élevée.
